# EUROPEAN PATENT SPECIFICATION

(11) **EP 3 572 464 B1**
(45) Date of publication and mention of the grant of the patent: **04.06.2025**
(21) Application number: 18741546.8
(22) Date of filing: 11.01.2018
(51) Int. Cl.: C08L 71/03, B32B 1/08, B32B 25/14, C08K 5/39, B32B 25/02, B32B 25/10, B32B 25/16, B32B 25/18, B32B 27/08, B32B 27/12, B32B 27/20, B32B 27/28, B32B 27/30, B32B 5/02, B32B 27/32, B32B 27/34, B32B 27/36, B32B 27/38, B32B 27/40, C08K 5/3465, F16L 11/04

(54) **COMPOSITION FOR LAMINATE**
ZUSAMMENSETZUNG FÜR LAMINATE
COMPOSITION POUR STRATIFIÉ

(30) Priority: 18.01.2017 JP 2017006710
(43) Date of publication of application: 27.11.2019
(73) Proprietor: Osaka Soda Co., Ltd., Osaka-shi, Osaka 550-0011 (JP)
(72) Inventor: HARADA,Tomonori, Osaka-shi Osaka 550-0011 (JP); FUNAYAMA,Toshiyuki, Osaka-shi Osaka 550-0011 (JP); OZAKI,Taro, Osaka-shi Osaka 550-0011 (JP); IMAOKA,Tsuyoshi, Osaka-shi Osaka 550-0011 (JP)
(74) Representative: Cabinet Beau de Loménie
(86) International application number: PCT/JP2018/000449
(87) International publication number: WO 2018/135367

(56) References cited:
- WO-A1-2012/063895
- JP-A- 2003 253 112
- JP-A- 2003 253 112
- JP-A- 2007 261 079
- JP-A- 2008 266 558
- JP-A- 2008 266 558
- JP-A- 2013 043 400
- US-B2- 9 404 022

## Description

### TECHNICAL FIELD

The present invention relates to a composition for a laminate.

### BACKGROUND ART

Automotive emission regulations have in recent years become extremely strict; and gasoline evaporative regulations, which is one category thereamong, have come to be increasingly intensified, with the United States being at the center of such activities. In view of such strict requirements, with respect to automotive fuel hoses as well, there has been progress in the development of fuel hoses such as might simultaneously possess resistance to thermal aging, weather resistance, resistance to rancid gasoline, resistance to alcohol-containing gasoline, gasoline impermeability, and so forth. As the material for such a fuel hose, fluorine-containing polymer may be cited as one example. However, because it is expensive and because it also has problems with respect to resistance to cold, a laminate is frequently employed in which a thin film of fluorine-containing polymer is used at an inner layer, and an epichlorohydrin-type rubber is used at an outer layer.

However, where laminated hoses having different types of polymer compositions such as the foregoing are employed, it is the adhesion between those hoses that will be most important. It is generally known that fluorine-containing polymers have poor adhesion with respect to other polymers, for which reason measures are typically employed such as the blending of additives of certain type(s) within polymer compositions and so forth. Where a laminate of a fluorine-containing polymer layer and an epichlorohydrin-type rubber layer is employed, adoption of the techniques described at Patent Reference Nos. 1 through 3 will permit adhesion of the fluorine-containing polymer layer and the epichlorohydrin-type rubber layer. However, as standardization of and changes in materials as a result of optimization of the members employed as well as increased life due to elimination of the need for maintenance has been carried out in recent years, there has also been demand for laminates in which there is firm adhesion of myriad types of materials having low permeability with respect to gases and various other types of rubbers.

Patent References 5 and 6 disclose compositions for laminates comprising an epichlorohydrin polymer, zinc dithiocarbamate, a salt of 1,8-diazabicyclo[5.4.0]undecene-7 and hydrotalcite.

While the present Applicant has developed Patent Reference No. 4 as a composition for use in a laminate, there is demand for firmer adhesion in the context of automotive fuel hoses. Furthermore, as room for improvement remains with respect to adhesion during steam vulcanization, further study has been sought.

### PRIOR ART REFERENCES

### PATENT REFERENCES

Patent Reference No. 1: Japanese Patent Application Publication Kokai No. S64[1989]-11180
Patent Reference No. 2: Japanese Patent Application Publication Kokai No. H9[1997]-85898
Patent Reference No. 3: Japanese Patent Application Publication Kokai No. 2006-306053
Patent Reference No. 4: Japanese Patent No. 5818169
Patent Reference No. 5: JP2003253112A
Patent Reference No. 6: JP2008266558A

### SUMMARY OF INVENTION

### PROBLEM TO BE SOLVED BY INVENTION

It is an object of the present invention to provide a hose or tube comprising a laminate, a laminate employing a composition for a laminate, and a composition for a laminate for the purpose of achieving a laminate having more excellent adhesion when vulcanized and made to adhere.

### MEANS FOR SOLVING PROBLEM

A composition for a laminate in accordance with the present invention is characterized in that it contains (a) epichlorohydrin-type polymer; (b) zinc dithiocarbamate; (c) at least one compound which is a species selected from among the group consisting of 1,8-diazabicyclo[5.4.0]undecene-7 salt, 1,5-diazabicyclo[4.3.0]nonene-5 salt, 1,8-diazabicyclo[5.4.0]undecene-7, and 1,5-diazabicyclo[4.3.0]nonene-5; and (d) metal salt hydrate wherein the (d) metal salt hydrate is a hydrate of a sulfate or acetate of a metal selected among sodium, aluminum, calcium, zinc, manganese, lanthanum, titanium, zirconium, iron, cobalt, nickel, magnesium, and copper.

Furthermore, the present invention may be described as follows.
Item 1 A composition for a laminate characterized in that it contains (a) epichlorohydrin-type polymer; (b) zinc dithiocarbamate; (c) at least one compound which is a species selected from among the group consisting of 1,8-diazabicyclo[5.4.0]undecene-7 salt, 1,5-diazabicyclo[4.3.0]nonene-5 salt, 1,8-diazabicyclo[5.4.0]undecene-7, and 1,5-diazabicyclo[4.3.0]nonene-5; and (d) metal salt hydrate, wherein the (d) metal salt hydrate is a hydrate of a sulfate or acetate of a metal selected among sodium, aluminum, calcium, zinc, manganese, lanthanum, titanium, zirconium, iron, cobalt, nickel, magnesium, and copper.
Item 2 The composition for the laminate according to item 1 characterized in that it further contains (e) a compound having a vinyl group
Item 3 The composition for the laminate according to either item 1 or 2 characterized in that the (d) compound is 0.1 part by weight to 80 parts by weight for every 100 parts by weight of the (a) epichlorohydrin-type polymer.
Item 4 The composition for the laminate according to any of items 1 through 3 characterized in that it contains (f) epoxy resin.
Item 5 The composition for the laminate according to any of items 1 through 4 characterized in that it contains (g) copper salt.
Item 6 The composition for the laminate according to any of items 1 through 5 characterized in that it contains (h) vulcanizing agent.
Item 7 The composition for the laminate according to item 6 characterized in that the (h) vulcanizing agent contains at least one vulcanizing agent which is a species selected from among the group consisting of quinoxaline-type vulcanizing agent, thiourea-type vulcanizing agent, mercaptotriazine-type vulcanizing agent, bisphenol-type vulcanizing agent, sulfur-type vulcanizing agent, and peroxide-type vulcanizing agent.
Item 8 The composition for the laminate according to any of items 1 through 7 characterized in that the (c) compound is 0.3 part by weight to 3.0 parts by weight for every 100 parts by weight of the epichlorohydrin-type polymer.
Item 9 The laminate employing the composition for the laminate according to any of items 1 through 8.
Item 10 A hose or tube comprising the laminate according to item 9.
Item 11 An automotive fuel line comprising the hose or tube according to item 10.

### BENEFIT OF INVENTION

A laminate employing a composition for a laminate in accordance with the present invention has excellent adhesion when vulcanized and made to adhere, and moreover has excellent adhesion when made to adhere with use of steam. A hose or tube comprising a laminate in accordance with the present invention is useful when employed as automotive fuel line.

### EMBODIMENTS FOR CARRYING OUT INVENTION

A composition for a laminate in accordance with the present invention contains at least (a) epichlorohydrin-type polymer; (b) zinc dithiocarbamate; (c) at least one compound which is a species selected from among the group consisting of 1,8-diazabicyclo[5.4.0]undecene-7 salt, 1,5-diazabicyclo[4.3.0]nonene-5 salt, 1,8-diazabicyclo[5.4.0]undecene-7, and 1,5-diazabicyclo[4.3.0]nonene-5; and (d) metal salt hydrate, wherein the (d) metal salt hydrate is a hydrate of a sulfate or acetate of a metal selected among sodium, aluminum, calcium, zinc, manganese, lanthanum, titanium, zirconium, iron, cobalt, nickel, magnesium, and copper.

As the (a) epichlorohydrin-type polymer used in the composition for the laminate in accordance with the present invention, open-ring polymers having (-CH₂-CH(CH₂Cl)-O-) constituent units derived from epichlorohydrin, which to be more specific are epichlorohydrin open-ring polymers, and open-ring polymers of epichlorohydrin and monomers capable of copolymerization with epichlorohydrin, of which epichlorohydrin-alkylene oxide open-ring polymers, epichlorohydrin-glycidyl open-ring polymers, epichlorohydrin-alkylene oxide-glycidyl open-ring polymers may be cited as examples, and which may also be described as epichlorohydrin rubber. As monomers capable of copolymerization with epichlorohydrin, ethylene oxide, propylene oxide, n-butylene oxide, and other such alkylene oxides, methyl glycidyl ether, ethyl glycidyl ether, n-glycidyl ether, allyl glycidyl ether, phenyl glycidyl ether, and other such glycidyls may be cited as examples. In more specific terms, epichlorohydrin homopolymer, epichlorohydrin-ethylene oxide copolymer, epichlorohydrin-propylene oxide copolymer, epichlorohydrin-ethylene oxide-allyl glycidyl ether terpolymer, epichlorohydrin-ethylene oxide-propylene oxide-allyl glycidyl ether tetrapolymer, and so forth may be cited as examples; epichlorohydrin homopolymer, epichlorohydrin-ethylene oxide copolymer, and epichlorohydrin-ethylene oxide-allyl glycidyl ether terpolymer being preferred. While there is no particular limitation with respect to molecular weight of such homopolymer or copolymer, as expressed in Mooney viscosity units, ML₁₊₄ (100° C) = on the order of 30 to 150 is typical. Any one of such homopolymer or copolymers may be used alone or two or more species chosen from thereamong may be used in combination.

As the (a) epichlorohydrin-type polymer, from the standpoint of heat-resistance, it is preferred that epichlorohydrin-based polymer units be present in an amount that is not less than 10 mol%, more preferred that this be not less than 20 mol%, and particularly preferred that this be not less than 25 mol%. Epichlorohydrin-based polymer units may be calculated based on chlorine content or the like. Chlorine content may be determined based on potentiometric titration in accordance with the method described at JIS K7229.

With epichlorohydrin-ethylene oxide copolymer, it is preferred that the lower limit of the range in values for epichlorohydrin-based polymer units be not less than 10 mol%, more preferred that this be not less than 20 mol%, and particularly preferred that this be not less than 25 mol%; and it is preferred that the upper limit of the range in values therefor be not greater than 95 mol%, more preferred that this be not greater than 75 mol%, and particularly preferred that this be not greater than 65 mol%. It is preferred that the lower limit of the range in values for ethylene oxide-based polymer units be not less than 5 mol%, more preferred that this be not less than 25 mol%, and particularly preferred that this be not less than 35 mol%; and it is preferred that the upper limit of the range in values therefor be not greater than 90 mol%, more preferred that this be not greater than 80 mol%, and particularly preferred that this be not greater than 75 mol%.

With epichlorohydrin-ethylene oxide-allyl glycidyl ether terpolymer, it is preferred that the lower limit of the range in values for epichlorohydrin-based polymer units be not less than 10 mol%, more preferred that this be not less than 20 mol%, and particularly preferred that this be not less than 25 mol%; and it is preferred that the upper limit of the range in values therefor be not greater than 95 mol%, more preferred that this be not greater than 75 mol%, and particularly preferred that this be not greater than 65 mol%. It is preferred that the lower limit of the range in values for ethylene oxide-based polymer units be not less than 4 mol%, more preferred that this be not less than 24 mol%, and particularly preferred that this be not less than 34 mol%; and it is preferred that the upper limit of the range in values therefor be not greater than 89 mol%, more preferred that this be not greater than 79 mol%, and particularly preferred that this be not greater than 74 mol%. It is preferred that the lower limit of the range in values for allyl glycidyl ether-based polymer units be not less than 1 mol%; and it is preferred that the upper limit of the range in values therefor be not greater than 10 mol%, more preferred that this be not greater than 8 mol%, and particularly preferred that this be not greater than 7 mol%.

Copolymeric composition of epichlorohydrin-ethylene oxide copolymer and epichlorohydrin-ethylene oxide-allyl glycidyl ether terpolymer may be determined based on chlorine content and iodine value.

Chlorine content is measured based on potentiometric titration in accordance with the method described at JIS K7229. Mole fraction of epichlorohydrin-based constituent units is calculated from the chlorine content that is obtained.

Iodine value is measured using the method according to JIS K6235. Mole fraction of allyl glycidyl ether-based constituent units is calculated from the iodine value that is obtained.

Mole fraction of ethylene oxide-based constituent units is calculated from the mole fraction of epichlorohydrin-based constituent units and the mole fraction of allyl glycidyl ether-based constituent units.

As the (b) zinc dithiocarbamate used in the composition for the laminate in accordance with the present invention, zinc N-pentamethylenedithiocarbamate, zinc dibenzyldithiocarbamate, zinc N-ethyl-N-phenyldithiocarbamate, zinc dimethyldithiocarbamate, zinc diethyldithiocarbamate, zinc bis(dimethyldithiocarbamoyl)ethylene-bis-dithiocarbamate zinc dibutyldithiocarbamate, and zinc diamyldithiocarbamate may be cited as examples; it being more preferred from the standpoint of improvement of adhesion that the (b) compound be zinc N-pentamethylenedithiocarbamate.

For every 100 parts by weight of the (a) epichlorohydrin-type polymer, it is preferred that the (b) compound used in the composition for the laminate in accordance with the present invention be blended therein in an amount that is 0.1 part by weight to 4 parts by weight, more preferred that this be 0.5 part by weight to 3 parts by weight, and particularly preferred that this be 1 part by weight to 2 parts by weight.

The composition for the laminate in accordance with the present invention contains (c) at least one compound which is a species selected from among the group consisting of 1,8-diazabicyclo[5.4.0]undecene-7 salt, 1,5-diazabicyclo[4.3.0]nonene-5 salt, 1,8-diazabicyclo[5.4.0]undecene-7 (also referred to as DBU in the present application), and 1,5-diazabicyclo[4.3.0]nonene-5 (also referred to as DBN in the present application).

Examples of the (c) compound which may be cited as examples are 1,8-diazabicyclo[5.4.0]undecene-7 p-toluenesulfonate, 1,8-diazabicyclo[5.4.0]undecene-7 phenolate, 1,8-diazabicyclo[5.4.0]undecene-7 phenol resin salt, 1,8-diazabicyclo[5.4.0]undecene-7 orthophthalate, 1,8-diazabicyclo[5.4.0]undecene-7 formate, 1,8-diazabicyclo[5.4.0]undecene-7 octylate, 1,8-diazabicyclo[5.4.0]undecene-7 carbonate, 1,8-diazabicyclo[5.4.0]undecene-7 stearate, 1,8-diazabicyclo[5.4.0]undecene-7 2-ethylhexylate, 1,8-diazabicyclo[5.4.0]undecene-7 benzoate, 1,8-diazabicyclo[5.4.0]undecene-7 salicylate, 1,8-diazabicyclo[5.4.0]undecene-7 3-hydroxy-2-naphthoate, 1,8-diazabicyclo[5.4.0]undecene-7 2-mercaptobenzothiazolate, 1,8-diazabicyclo[5.4.0]undecene-7 2-mercaptobenzimidazolate, 1,5-diazabicyclo[4.3.0]nonene-5 p-toluenesulfonate, 1,5-diazabicyclo[4.3.0]nonene-5 phenolate, 1,5-diazabicyclo[4.3.0]nonene-5 phenol resin salt, 1,5-diazabicyclo[4.3.0]nonene-5 orthophthalate, 1,5-diazabicyclo[4.3.0]nonene-5 formate, 1,5-diazabicyclo[4.3.0]nonene-5 octylate, 1,5-diazabicyclo[4.3.0]nonene-5 carbonate, 1,5-diazabicyclo[4.3.0]nonene-5 stearate, 1,5-diazabicyclo[4.3.0]nonene-5 2-ethylhexylate, 1,5-diazabicyclo[4.3.0]nonene-5 benzoate, 1,5-diazabicyclo[4.3.0]nonene-5 salicylate, 1,5-diazabicyclo[4.3.0]nonene-5 3-hydroxy-2-naphthoate, 1,5-diazabicyclo[4.3.0]nonene-5 2-mercaptobenzothiazolate, 1,5-diazabicyclo[4.3.0]nonene-5 2-mercaptobenzimidazolate, 1,8-diazabicyclo[5.4.0]undecene-7, and 1,5-diazabicyclo[4.3.0]nonene-5.

It is preferred that the (c) compound be a compound which is at least one species selected from among the group consisting of 1,8-diazabicyclo[5.4.0]undecene-7 p-toluenesulfonate, 1,8-diazabicyclo[5.4.0]undecene-7 phenolate, 1,8-diazabicyclo[5.4.0]undecene-7 phenol resin salt, 1,8-diazabicyclo[5.4.0]undecene-7 orthophthalate, 1,8-diazabicyclo[5.4.0]undecene-7 formate, 1,8-diazabicyclo[5.4.0]undecene-7 octylate, 1,5-diazabicyclo[4.3.0]nonene-5 p-toluenesulfonate, 1,5-diazabicyclo[4.3.0]nonene-5 phenolate, 1,5-diazabicyclo[4.3.0]nonene-5 phenol resin salt, 1,5-diazabicyclo[4.3.0]nonene-5 orthophthalate, 1,5-diazabicyclo[4.3.0]nonene-5 formate, 1,5-diazabicyclo[4.3.0]nonene-5 octylate, 1,8-diazabicyclo[5.4.0]undecene-7, and 1,5-diazabicyclo[4.3.0]nonene-5.

From the standpoint of improvement of adhesion, it is more preferred that the (c) compound be 1,8-diazabicyclo[5.4.0]undecene-7 phenolate.

For every 100 parts by weight of the (a) epichlorohydrin-type polymer, it is preferred that the (c) compound of the composition for the laminate in accordance with the present invention be blended therein in an amount that is 0.3 part by weight to 3.0 parts by weight, more preferred that this be 0.5 part by weight to 2.0 parts by weight, and particularly preferred that this be 0.5 part by weight to 1.5 parts by weight.

As the (d) metal salt hydrate of the composition for the laminate in accordance with the present disclosure, hydrates of inorganic salts such as silicates, borates, phosphates, sulfates, nitrates, carbonates, and the like of such metals as sodium, aluminum, calcium, zinc, manganese, lanthanum, titanium, zirconium, iron, cobalt, nickel, magnesium, and copper; and hydrates of organic salts of such carboxylic acids as benzoic acid, phthalic acid, maleic acid, succinic acid, salicylic acid, citric acid, and so forth, may be cited as examples. According to the invention, the (d) metal salt hydrate is a hydrate of a sulfate or acetate of a metal selected among sodium, aluminum, calcium, zinc, manganese, lanthanum, titanium, zirconium, iron, cobalt, nickel, magnesium, and copper; more preferred that this be a hydrate of an acetate and/or sulfate of a metal selected from among sodium, calcium, magnesium, and copper; and particularly preferred that this be calcium sulfate hemihydrate, calcium sulfate dihydrate, sodium sulfate decahydrate, copper(II) sulfate pentahydrate, or magnesium sulfate decahydrate.

For every 100 parts by weight of the (a) epichlorohydrin-type polymer, the (d) metal salt hydrate of the composition for the laminate in accordance with the present invention is blended therein in an amount that is 0.1 part by weight to 80 parts by weight, it being preferred that this be 0.5 part by weight to 70 parts by weight, more preferred that this be 1 part by weight to 50 parts by weight, and particularly preferred that this be 1 part by weight to 20 parts by weight. These are preferred because within such ranges adequate adhesive effect will be obtained, and there will be no loss of mechanical properties.

As the (e) compound having a vinyl group used in the composition for the laminate in accordance with the present invention, it being sufficient so long as it has a vinyl group, this may be a compound having an allyl group or a compound having a (meth)acryloyl group. As the (e) compound having the vinyl group, it is preferred that this have two or more vinyl groups (allyl group(s) and/or (meth)acryloyl group(s)) within the molecule, more preferred that this have two to five vinyl groups (allyl group(s) and/or (meth)acryloyl group(s)) therewithin, and particularly preferred that this have two to four vinyl groups (allyl group(s) and/or (meth)acryloyl group(s)) therewithin. Note that (meth)acryloyl group means an acryloyl group and/or a methacryloyl group.

As the compound having the vinyl group, methyl vinyl ether, ethyl vinyl ether, n-propyl vinyl ether, and other such alkyl vinyl ethers, ethoxymethyl vinyl ether, 2-methoxyethyl vinyl ether, 2-ethoxyethyl vinyl ether, 2-butoxyethyl vinyl ether, and other such alkoxyalkyl vinyl ethers, 3-hydroxypropyl vinyl ether, 4-hydroxybutyl vinyl ether, and other such hydroxyalkyl vinyl ethers, and other such monovinyl ether compounds, divinyl ether, ethylene glycol divinyl ether, diethylene glycol divinyl ether, triethylene glycol divinyl ether, and other such divinyl ether compounds, trimethylolpropane trivinyl ether, pentaerythritol trivinyl ether, and other such trivinyl ether compounds, pentaerythritol tetravinyl ether, ditrimethylolpropane tetravinyl ether, and other such tetravinyl ether compounds and the like may be cited as examples.

As the compound having the allyl group, it is preferred that this be an allyl ester, allyl ether, allyl amine, allyl cyanurate, allyl isocyanurate, allyl thioether, and/or allylonium; more preferred that this be a polyfunctional allyl ester, polyfunctional allyl ether, polyfunctional allyl amine, polyfunctional cyanurate, polyfunctional isocyanurate, and/or polyfunctional allyl thioether that is a compound having two or more allyl groups within the same molecule; and particularly preferred that this be a polyfunctional allyl ester, polyfunctional cyanurate, and/or a polyfunctional isocyanurate.

As the polyfunctional allyl ester, a polyfunctional allyl ester selected from among aliphatic polyfunctional allyl esters, alicyclic polyfunctional allyl esters, and aromatic polyfunctional allyl esters may be employed. Any one allyl ester selected from among aliphatic polyfunctional allyl esters, alicyclic polyfunctional allyl esters, and aromatic polyfunctional allyl esters may be used alone or two or more species chosen from thereamong may be used in combination. Here, polyfunctional allyl ester means a compound having two or more allyl ester groups (-COOCH₂-CH=CH₂ groups); aliphatic polyfunctional allyl ester means a compound having an aliphatic hydrocarbon group and two or more allyl ester groups; alicyclic polyfunctional allyl ester means a compound having an alicyclic hydrocarbon group and two or more allyl ester groups; and aromatic polyfunctional allyl ester means a compound having an aromatic hydrocarbon group and two or more allyl ester groups. In the context of the present specification, note that the concept of an aliphatic polyfunctional allyl ester includes diallyl oxalates in which two allyl ester groups are directly bonded.

As specific examples of aliphatic polyfunctional allyl esters, diallyl oxalate, diallyl malonate, diallyl succinate, diallyl glutarate, diallyl adipate, diallyl pimelate, diallyl suberate, diallyl azelate, diallyl sebacate, diallyl fumarate, diallyl maleate, triallyl citrate, diallyl itaconate, and tetraallyl 1,2,3,4-butanetetracarboxylate may be cited as examples.

As specific examples of alicyclic polyfunctional allyl esters, diallyl cyclobutanedicarboxylate, diallyl cycloheptanedicarboxylate, diallyl cyclohexanedicarboxylate (diallyl hexahydrophthalate), diallyl norbornanedicarboxylate, diallyl cyclobutenedicarboxylate, diallyl cycloheptenedicarboxylate, diallyl cyclohexenedicarboxylate (diallyl tetrahydrophthalate), diallyl norbornenedicarboxylate, 3-methyl-hexahydro-1,2-diallyl phthalate, 4-methyl-hexahydro-1,2-diallyl phthalate, 3-methyl-1,2,3,6-tetrahydro-1,2-diallyl phthalate, 4-methyl-1,2,3,6-tetrahydro-1,2-diallyl phthalate, 3,6-endomethylene-3-methyl-1,2,3,6-tetrahydro-1,2-diallyl phthalate, 3,6-endomethylene-4-methyl-1,2,3,6-tetrahydro-1,2-diallyl phthalate, diallyl 4-cyclohexene-1,2-dicarboxylate, diallyl 2-cyclohexene-1,2-dicarboxylate, tetraallyl 1,2,3,4-butanetetracarboxylate, and so forth may be cited as examples. Thereamong, diallyl 1,2-cyclohexanedicarboxylates, diallyl 1,3-cyclohexanedicarboxylates, diallyl 1,4-cyclohexanedicarboxylates, and diallyl norbornanedicarboxylates are preferred.

As the aromatic polyfunctional allyl ester, diallyl phthalate (diallyl orthophthalate, diallyl isophthalate, and diallyl terephthalate), triallyl trimesate, triallyl trimellitate, tetraallyl pyromellitate, hexaallyl benzenehexacarboxylate, hexaallyl mellitate, and 1,3,5,7-tetraallylnaphthalene may be cited as examples, triallyl trimesate and diallyl phthalate being preferred thereamong.

As the polyfunctional allyl ether, this means a compound having two or more allyl ether groups (-O-CH₂-CH=CH₂ groups), examples of which that may be cited being ethylene glycol diallyl ether, diethylene glycol diallyl ether, polyethylene glycol diallyl ether, propylene glycol diallyl ether, butylene glycol diallyl ether, hexanediol diallyl ether, bisphenol A alkylene oxide diallyl ether, bisphenol F alkylene oxide diallyl ether, trimethylolpropane triallyl ether, ditrimethylolpropane tetraallyl ether, glycerine triallyl ether, pentaerythritol tetraallyl ether, dipentaerythritol pentaallyl ether, dipentaerythritol hexaallyl ether, polyethylene glycol diallyl ether, pentaerythritol diallyl ether, pentaerythritol triallyl ether, pentaerythritol tetraallyl ether, 1,4-diallyloxymethylbenzene, trimethylolpropane triallyl ether ethylene oxide adduct, ditrimethylolpropane tetraallyl ether ethylene oxide adduct, pentaerythritol tetraallyl ether ethylene oxide adduct, and dipentaerythritol hexaallyl ether ethylene oxide adduct, it being preferred that this be polyethylene glycol diallyl ether.

As the polyfunctional allyl amine, this means an amine having two or more allyl groups (-CH₂-CH=CH₂ groups), an amine that has a skeleton which is an alicyclic or bialicyclic compound having -NH-CO-NH- and that has two or more allyl groups (-CH₂-CH=CH₂ groups) being preferred, and an amine that has a glycoluril skeleton and that has two or more allyl groups (-CH₂-CH=CH₂ groups) being more preferred. As the polyfunctional allyl amine, diallyl amine, diallyl methylamine, diallyl ethylamine, triallyl amine, and 1,3,4,6-tetraallyl glycoluril may be cited as examples.

As the polyfunctional allyl cyanurate, this is a compound having an allyl group and a cyanurate skeleton, examples of which that may be cited being allyl cyanurate, diallyl cyanurate, triallyl cyanurate, and so forth.

As the polyfunctional allyl isocyanurate, this is a compound having an allyl group and an isocyanurate skeleton, examples of which that may be cited being allyl isocyanurate, diallyl isocyanurate, triallyl isocyanurate, and so forth.

As the polyfunctional allyl thioether, this is a compound having two or more allyl groups (-CH₂-CH=CH₂ groups) and a thioether structure, an example of which that may be cited being alkylene glycol diallyl thioether.

As the allylonium, monofunctional allyloniums, polyfunctional allyloniums, and so forth may be cited as examples; monoallyl trialkylammonium salts, diallyl dialkylammonium salts, triallyl monoalkylammonium salts, and so forth may be cited as examples; and chlorides, bromides, iodides, and so forth thereof may be cited as examples.

As the compound having the allyl group, diallyl terephthalate, diallyl orthophthalate, diallyl isophthalate, diallyl naphthalate, trimethylolpropane diallyl ether, pentaerythritol diallyl ether, bisphenol A diallyl ether, bisphenol F diallyl ether, propylene glycol diallyl ether, glycerine diallyl ether, diallyl 1,2-cyclohexanedicarboxylate, diallyl 1,3-cyclohexanedicarboxylates, diallyl 1,4-cyclohexanedicarboxylates, and other such diallyl compounds, triallyl cyanurate, triallyl isocyanurate, triallyl trimellitate, triallyl trimesate, trimethylolpropane triallyl ether, pentaerythritol triallyl ether, and other such triallyl compounds and the like are preferred.

As the compound having a (meth)acryloyl group, butyl (meth)acrylate, lauryl (meth)acrylate, stearyl (meth)acrylate, 2-ethylhexyl (meth)acrylate, tetrahydrofurfuryl (meth)acrylate, hydroxyethyl (meth)acrylate, and other such alkyl (meth)acrylates, methoxy propylene glycol (meth)acrylate, ethoxy diethylene glycol (meth)acrylate, and other such alkoxy alkylene glycol (meth)acrylates, and other such mono(meth)acrylates, neopentyl glycol di(meth)acrylate, polyethylene glycol di(meth)acrylate, and other such alkylene glycol di(meth)acrylates, dipropylene glycol di(meth)acrylate, tripropylene glycol di(meth)acrylate, 1,6-hexanediol di(meth)acrylate and 1,9-nonanediol di(meth)acrylate which are alkylenediol di(meth)acrylates and other such bifunctional (meth)acrylates, trimethylolpropane tri(meth)acrylate, pentaerythritol tri(meth)acrylate ethylene oxide and/or propylene oxide-modified trimethylolpropane triaclate, and other such trifunctional (meth)acrylates, pentaerythritol tetra(meth)acrylate, ditrimethylolpropane tetra(meth)acrylate, and other such tetrafunctional (meth)acrylates may be cited as examples.

For every 100 parts by weight of the (a) epichlorohydrin-type polymer, it is preferred that the (e) compound of the composition for the laminate in accordance with the present invention be blended therein in an amount that is 1 part by weight to 20 parts by weight, more preferred that this be 2 parts by weight to 15 parts by weight, and particularly preferred that this be 3 parts by weight to 10 parts by weight.

A composition for adhesive use in accordance with the present invention may contain the (a) epichlorohydrin-type polymer, the (b) compound, the (c) compound, and the (d) metal salt hydrate as essential components, and may further contain the (f) epoxy resin as an optional component.

As the (f) epoxy resin, at least one resin which is a species selected from among the group consisting of bisphenol-A-type epoxy resin, bisphenol-F-type epoxy resin, phenol novolac-type epoxy resin, o-cresol novolac-type epoxy resin, amine-type epoxy resin, hydrated bisphenol-A-type epoxy resin, and polyfunctional epoxy resin is, for example, preferred. Thereamong, bisphenol-A-type epoxy resin is preferred due to its satisfactory chemical resistance and adhesion, an epoxy resin indicated by Formula (1) being particularly preferred: 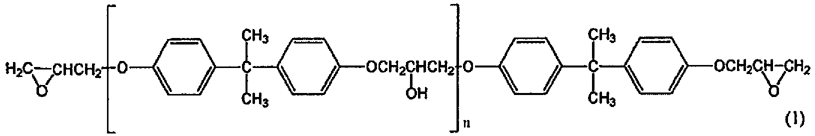 Here, at Formula (1), n is an average value, 0.1 to 3 being preferred, 0.1 to 0.5 being more preferred, and 0.1 to 0.3 being still more preferred.

For every 100 parts by weight of the (a) epichlorohydrin-type polymer, it is preferred that the (f) epoxy resin be 0.1 part by weight to 5 parts by weight, and more preferred that this be 0.3 part by weight to 3 parts by weight.

Furthermore, in a preferred embodiment of the composition for the laminate in accordance with the present invention, for every 100 parts by weight of the (a) epichlorohydrin-type polymer, the sum of the (c) compound and the (f) epoxy resin exceeds 2.0 parts by weight.

It is furthermore preferred from the standpoint of improving adhesion that the composition for the laminate contain (g) copper salt.

As the (g) copper salt, an organic copper salt is preferred. As the organic copper salt, copper salts of formic acid, acetic acid, butyric acid, stearic acid, and other such saturated carboxylic acids, copper salts of oleic acid, linoleic acid, and other such unsaturated carboxylic acids, copper salts of salicylic acid, benzoic acid, phthalic acid, and other such aromatic carboxylic acids, copper salts of oxalic acid, succinic acid, adipic acid, maleic acid, fumaric acid, and other such dicarboxylic acids, copper salts of lactic acid, citric acid, and other such hydroxy acids, copper salts of carbamic acid, copper dimethyldithiocarbamate, copper diethyldithiocarbamate, copper dibutyldithiocarbamate, copper N-ethyl-N-phenyldithiocarbamate, copper N-pentamethylenedithiocarbamate, copper dibenzyldithiocarbamate, and other such copper salts of thiocarbamic acids, sulfonic acid, and so forth may be cited as examples. As the organic copper salt, copper salts of saturated carboxylic acids, copper salts of unsaturated carboxylic acids, copper salts of aromatic carboxylic acids, and copper salts of thiocarbamic acids are preferred; and copper stearate, copper dimethyldithiocarbamate, copper diethyldithiocarbamate, copper dibutyldithiocarbamate are more preferred.

From the standpoint of improvement of adhesion, for every 100 parts by weight of the (a) epichlorohydrin-type polymer, the (g) copper salt is blended therein in an amount that is 0.01 part by weight to 5 parts by weight, it being preferred that this be 0.05 part by weight to 3 parts by weight. It is more preferred that this be 0.1 part by weight to 2 parts by weight. These are preferred because within such ranges adequate adhesive effect will be obtained, and there will be no loss of mechanical properties when vulcanized.

A composition for the laminate in accordance with the present invention contains (h) vulcanizing agent. As the (h) vulcanizing agent, conventionally known substances may be used.

As the (h) vulcanizing agent, known vulcanizing agents which make use of the reactivity of chlorine atom(s), e.g., polyamine-type vulcanizing agents, thiourea-type vulcanization agents, thiadiazole-type vulcanization agents, mercaptotriazine-type vulcanizing agents, pyrazine-type vulcanizing agents, quinoxaline-type vulcanizing agents, bisphenol-type vulcanizing agents, and so forth, may be cited as examples.

Examples of known (h) vulcanizing agents that make use of the reactivity of chlorine atom(s) and that are polyamine-type vulcanizing agents are ethylenediamine, hexamethylenediamine, diethylenetriamine, triethylenetetraamine, hexamethylenetetraamine, p-phenylenediamine, cumenediamine, N,N'-dicinnamylidene-1,6-hexanediamine, ethylenediamine carbamate, hexamethylenediamine carbamate, and so forth.

As the thiourea-type vulcanization agent, ethylene thiourea, 1,3-diethylthiourea, 1,3-dibutylthiourea, trimethylthiourea, and so forth may be cited as examples.

As the thiadiazole-type vulcanization agent, 2,5-dimercapto-1,3,4-thiadiazole, 2-mercapto-1,3,4-thiadiazole-5-thiobenzoate, and so forth may be cited as examples.

As the mercaptotriazine-type vulcanizing agent, 2,4,6-trimercapto-1,3,5-triazine, 2-methoxy-4,6-dimercaptotriazine, 2-hexylamino-4,6-dimercaptotriazine, 2-diethylamino-4,6-dimercaptotriazine, 2-cyclohexaneamino-4,6-dimercaptotriazine, 2-dibutylamino-4,6-dimercaptotriazine, 2-anilino-4,6-dimercaptotriazine, 2-phenylamino-4,6-dimercaptotriazine, and so forth may be cited as examples.

As the pyrazine-type vulcanizing agent, 2,3-dimercaptopyrazine derivatives and the like may be cited as examples, examples of 2,3-dimercaptopyrazine derivatives which may be cited being pyrazine-2,3-dithiocarbonate, 5-methyl-2,3-dimercaptopyrazine, 5-ethylpyrazine-2,3-dithiocarbonate, 5,6-dimethyl-2,3-dimercaptopyrazine, 5,6-dimethylpyrazine-2,3-dithiocarbonate, and so forth.

As the quinoxaline-type vulcanizing agent, 2,3-dimercaptoquinoxaline derivatives and the like may be cited as examples, examples of 2,3-dimercaptoquinoxaline derivatives which may be cited being quinoxaline-2,3-dithiocarbonate, 6-methylquinoxaline-2,3-dithiocarbonate, 6-ethyl-2,3-dimercaptoquinoxaline, 6-isopropylquinoxaline-2,3-dithiocarbonate, 5,8-dimethylquinoxaline-2,3-dithiocarbonate, and so forth.

As the bisphenol-type vulcanizing agent, 4,4'-dihydroxydiphenylsulfoxide, 4,4'-dihydroxydiphenylsulfone (bisphenol S), 1,1'-cyclohexylidene-bis(4-hydroxybenzene), 2-chloro-1,4-cyclohexylene-bis(4-hydroxybenzene), 2,2-isopropylidene-bis(4-hydroxybenzene), (bisphenol A), hexafluoroisopropylidene-bis(4-hydroxybenzene) (bisphenol AF), 2-fluoro-1,4-phenylene-bis(4-hydroxybenzene), and so forth may be cited as examples.

A composition for a laminate in accordance with the present invention may employ, as is, known vulcanization accelerator(s) and/or retarder(s) in the present invention together with the (h) vulcanizing agent. As vulcanization accelerators that may be used in combination with known (h) vulcanizing agents that make use of the reactivity of chlorine atom(s), primary, secondary, and tertiary amines, organic salts of said amines or adducts thereof, guanidine-type accelerators, thiuram-type accelerators, dithiocarbamate-type accelerators, and so forth may be cited as examples. Furthermore, as retarders, N-cyclohexanethiophthalimide and the like may be cited as examples.

As examples of vulcanization accelerators that are primary, secondary, and tertiary amines, primary, secondary, and tertiary amines of aliphatic or cyclic fatty acids having 5 to 20 carbons are particularly preferred, typical examples of such amines being n-hexylamine, octylamine, dibutylamine, tributylamine, hexamethylenediamine, and so forth.

As organic acids that form salts with amines, carboxylic acids, carbamic acid, 2-mercapto-benzothiazole, dithiophosphoric acid, and so forth may be cited as examples. Furthermore, as substances that form adducts with the foregoing amines, alcohols, oximes, and so forth may be cited as examples. As specific examples of organic salts and adducts of amines, n-butylamine/acetic acid salt, hexamethylenediamine/carbamic acid salt, the dicyclohexylamine salt of 2-mercapto-benzothiazole, and so forth may be cited as examples.

As the guanidine-type accelerator, diphenylguanidine, ditolylguanidine, and so forth may be cited as examples.

As specific examples of thiuram-type vulcanization accelerators, tetramethylthiuram disulfide, tetramethylthiuram monosulfide, tetraethylthiuram disulfide, tetrabutylthiuram disulfide, dipentamethylenethiuram tetrasulfide, and so forth may be cited.

For every 100 parts by weight of the (a) epichlorohydrin-type polymer, it is preferred that vulcanization accelerator(s) and/or retarder(s) used in combination with known (h) vulcanizing agent(s) that make use of reactivity of chlorine atom(s) be blended therein in an amount that is 0 part by weight to 10 parts by weight, and more preferred that this be 0.1 part by weight to 5 parts by weight.

Furthermore, where the (a) epichlorohydrin-type polymer is epichlorohydrin-allyl glycidyl ether copolymer, epichlorohydrin-ethylene oxide-allyl glycidyl ether terpolymer, or other such polymer having double bond(s), known vulcanizing agents which are ordinarily employed in vulcanization of nitrile-type rubber, e.g., sulfur-type vulcanizing agents, peroxide-type vulcanizing agents, resin-type vulcanizing agents, quinone dioxime-type vulcanizing agents, and so forth, may be cited as examples.

As the sulfur-type vulcanizing agent, sulfur, morpholine disulfide, tetramethylthiuram disulfide, tetraethylthiuram disulfide, tetrabutylthiuram disulfide, N-N'-dimethyl-N-N'-diphenylthiuram disulfide, dipentanemethylenethiuram tetrasulfide, dipentamethylenethiuram tetrasulfide, and dipentamethylenethiuram hexasulfide may be cited as examples.

As the peroxide-type vulcanizing agent, tert-butyl hydroperoxide, p-menthane hydroperoxide, dicumyl peroxide, tert-butyl peroxide, 1,3-bis(tert-butylperoxyisopropyl) benzene, 2,5-dimethyl-2,5-di(tert-butylperoxy)hexane, benzoyl peroxide, and tert-butyl peroxybenzoate may be cited as examples.

As the resin-type vulcanizing agent, alkylphenol formaldehyde resins and the like may be cited as examples.

As the quinone dioxime-type vulcanizing agent, p-quinone dioxime and p-p'-dibenzoyl quinone dioxime may be cited as examples.

As vulcanization accelerator, vulcanization retarder, vulcanization accelerator activator, and/or crosslinking agent activator for use in combination with sulfur-type vulcanizing agent, peroxide-type vulcanizing agent, resin-type vulcanizing agent, and/or quinone dioxime-type vulcanizing agent, aldehyde-ammonia-type accelerator, aldehyde-amine-type accelerator, thiourea-type accelerator, guanidine-type accelerator, thiazole-type accelerator, sulfenamide-type accelerator, thiuram-type accelerator, dithiocarbamate-type accelerator, xanthate-type accelerator, and any of various other types of vulcanization accelerators, N-nitrosodiphenylamine, phthalic anhydride, N-cyclohexylthiophthalimide and other such vulcanization retarders, zinc oxide, stearic acid, zinc stearate, and other such vulcanization accelerator activators, quinone dioxime-type crosslinking agent activators, methacrylate-type crosslinking agent activators, allyl-type crosslinking agent activators, maleimide-type crosslinking agent activators, any of various other types of crosslinking agent activators, and so forth.

For every 100 parts by weight of the (a) epichlorohydrin-type polymer, it is preferred that vulcanization accelerator, vulcanization retarder, vulcanization accelerator activator, and/or crosslinking agent activator for use in combination with sulfur-type vulcanizing agent, peroxide-type vulcanizing agent, resin-type vulcanizing agent, and/or quinone dioxime-type vulcanizing agent be blended therein in an amount that is 0 part by weight to 10 parts by weight, and more preferred that this be 0.1 part by weight to 5 parts by weight.

At the composition for the laminate in accordance with the present invention, it is preferred that at least one vulcanizing agent which is a species selected from among the group consisting of thiourea-type vulcanizing agent, quinoxaline-type vulcanizing agent, sulfur-type vulcanizing agent, peroxide-type vulcanizing agent, mercaptotriazine-type vulcanizing agent, and bisphenol-type vulcanizing agent be employed; it is more preferred that at least one vulcanizing agent which is a species selected from among the group consisting of thiourea-type vulcanizing agent, quinoxaline-type vulcanizing agent, and bisphenol-type vulcanizing agent be employed; and it is particularly preferred that this be quinoxaline-type vulcanizing agent. Any one of such (h) vulcanizing agents may be used alone or two or more species chosen from thereamong may be used in mixture.

For every 100 parts by weight of the (a) epichlorohydrin-type polymer, it is preferred that the composition for the laminate in accordance with the present invention contain the (h) vulcanizing agent in amount that is 0.1 part by weight to 10 parts by weight. It is more preferred that this be 0.5 part by weight to 5 parts by weight.

The composition for the laminate in accordance with the present invention may contain acrylonitrile-butadiene rubber (NBR), hydrogenated NBR (H-NBR), acrylic rubber (ACM), ethylene-acrylate ester rubber (AEM), fluorinated rubber (FKM), chloroprene rubber (CR), chlorosulfonated polyethylene (CSM), chlorinated polyethylene (CPE), ethylene-propylene rubber (EPM, EPDM), and/or any other such rubber as desired. Where this is the case, it is preferred that the rubber be blended therein in an amount that is 1 part by weight to 50 parts by weight for every 100 parts by weight of the (a) epichlorohydrin-type polymer.

The composition for the laminate in accordance with the present invention may further contain resin(s) other than epoxy resin. As the resin, polymethyl methacrylate (PMMA) resin, polystyrene (PS) resin, polyurethane (PUR) resin, polyvinyl chloride (PVC) resin, ethylene-vinyl acetate (EVA) resin, styrene-acrylonitrile (AS) resin, polyethylene (PE) resin, and so forth may be cited as examples. Where this is the case, it is preferred that the resin be blended therein in an amount that is 1 part by weight to 50 parts by weight for every 100 parts by weight of the (a) epichlorohydrin-type polymer.

Furthermore, in accordance with the present invention, to the extent that the benefit of the present invention is not lost and depending on the purpose to which it is put, it is possible, as necessary, to blend thereinto any ordinary additives such as are typically blended in rubber compositions; e.g., filler, processing additive, plasticizer, acid acceptor, softener, antioxidant, colorant, stabilizer, adhesive activator, mold release agent, material for imparting electrical conductivity thereto, material for imparting thermal conductivity thereto, surface detackifier, tackifier, material for imparting flexibility thereto, material for improving heat resistance, flame retardant, ultraviolet light absorber, material for improving oil resistance, foaming agent, antiscorching agent, lubricant, and/or any of various other such additives. Furthermore, ordinarily used vulcanizing agents and/or vulcanization accelerators additives other than the foregoing may be blended thereinto alone or two or more species chosen from thereamong may be blended thereinto in combination.

As the filler, molybdenum disulfide, iron sulfide, copper sulfide, and other such metal sulfides; diatomaceous earth, asbestos, lithopone (zinc sulfide/barium sulfide), graphite, carbon black, carbon fluoride, calcium fluoride, coke, powdered quartz, talc, powdered mica, wollastonite, carbon fiber, aramid fiber, any of various types of whiskers, glass fiber, organic reinforcing material, organic filler, and so forth may be cited as examples.

As the processing additive, stearic acid, oleic acid, palmitic acid, lauric acid, and other such higher fatty acids; sodium stearate, zinc stearate, and other such higher fatty acid salts; stearamide, oleamide, and other such higher fatty acid amides; ethyl oleate and other such higher fatty acid esters; stearylamine, oleylamine, and other such higher aliphatic amines; carnauba wax, ceresin wax, and other such petroleum waxes; ethylene glycol, glycerine, diethylene glycol, and other such polyglycols; petroleum jelly, paraffin, and other such aliphatic hydrocarbons; silicone-type oil, silicone-type polymer, low molecular weight polyethylene, phthalate esters, phosphate esters, rosin, (halogenated) dialkylamines, (halogenated) dialkylsulfones, surface active agent, and so forth may be cited as examples.

As the plasticizer, phthalic acid derivatives and sebacic acid derivatives may be cited as examples; as the softener, lubricating oil, process oil, coal tar, castor oil, and calcium stearate may be cited as examples; and as the antioxidant, phenylenediamines, phosphates, quinolines, cresols, phenols, metal dithiocarbamates, and the like may be cited as examples.

The composition for the laminate in accordance with the present invention may be prepared by kneading together the (a) epichlorohydrin-type polymer, the (b) compound, the (c) compound, and the (d) metal salt hydrate; and further, where necessary, the (e) compound, the (f) epoxy resin, the (g) copper salt, and/or the (h) vulcanizing agent; and/or any other additive(s).

Kneading might, for example, be carried out at a temperature of 100° C or lower using an open roll mill, Banbury mixer, pressure kneader, or the like.

The composition for the laminate in accordance with the present invention may be used to form laminate(s) with other polymer composition(s). As method for manufacturing the laminate, by way of example, a method may be employed in which the composition for the laminate is laminated with other polymer composition(s) and this is subjected to hot vulcanization/adhesion. Heating temperature is 100° C to 200° C, and while vulcanization time varies depending on temperature, this is ordinarily carried out for 0.5 minutes to 300 minutes. As the heating method, heating by means of microwave, infrared, or steam, or injection molding or compression molding using a die, or any other such desired method may be employed.

In connection with the foregoing manufacture of the laminate, because firm adhesion can be achieved in chemical fashion during vulcanization without the need to adopt any particular complicated procedure, it is possible to provide a laminate having adequate adhesive strength even under harsh conditions. Furthermore, with regard to moldability, molding can be carried out at low cost, and molding is easy. Furthermore, because molding can be carried out using ordinary methods such as extrusion molding, it is possible to produce thin films, resulting in an improvement in terms of flexibility as well.

As other polymer layer(s), polymer layer(s) having low permeability with respect to gas(es) may be cited by way of example; and as polymer layer(s) having low permeability with respect to gas(es), it is preferred that fluorine-containing polymer(s) be employed.

As polymer(s) used in polymer layer(s) having low permeability with respect to gas(es), vinylidene fluoride-hexafluoropropene bipolymer, tetrafluoroethylene-hexafluoropropene bipolymer, vinylidene fluoride-hexafluoropropene-tetrafluoroethylene terpolymer, vinylidene fluoride-perfluoroalkyl vinyl ether-tetrafluoroethylene terpolymer, tetrafluoroethylene-perfluoroethyl vinyl ether copolymer, tetrafluoroethylene-perfluoropropyl vinyl ether copolymer, tetrafluoroethylene-perfluoroalkyl vinyl ether-chlorotrifluoro terpolymer, tetrafluoroethylene-propylene bipolymer, vinylidene fluoride-tetrafluoroethylene-tetrafluoroethylene terpolymer, ethylene-tetrafluoroethylene bipolymer, polyvinylidene fluoride, polytetrafluoroethylene, polychlorotrifluoroethylene (PCTFE), chlorotrifluoroethylene (CTFE) copolymer, polyvinylidene chloride resin, polyvinyl alcohol resin, ethylene-vinyl alcohol copolymer resin, nylon resin, polyacrylonitrile resin, polyester resin, and so forth may be cited as examples, vinylidene fluoride-hexafluoropropene bipolymer, tetrafluoroethylene-hexafluoropropene bipolymer, vinylidene fluoride-hexafluoropropene-tetrafluoroethylene terpolymer, vinylidene fluoride-perfluoroalkyl vinyl ether-tetrafluoroethylene terpolymer, tetrafluoroethylene-perfluoroethyl vinyl ether copolymer, tetrafluoroethylene-perfluoropropyl vinyl ether copolymer, tetrafluoroethylene-perfluoroalkyl vinyl ether-chlorotrifluoro terpolymer, tetrafluoroethylene-propylene bipolymer , vinylidene fluoride-tetrafluoroethylene-tetrafluoroethylene terpolymer, ethylene-tetrafluoroethylene bipolymer, polyvinylidene fluoride, polytetrafluoroethylene, and chlorotrifluoroethylene (CTFE) and PCTFE, copolymers being preferred, chlorotrifluoroethylene (CTFE) copolymer being particularly preferred.

As the CTFE copolymer, it is preferred that this comprise copolymerized units derived from CTFE (CTFE units), and copolymerized units derived from a monomer which is at least one species selected from among the group consisting of tetrafluoroethylene (TFE), hexafluoropropylene (HFP), perfluoro(alkyl vinyl ether) (PAVE), vinylidene fluoride (VdF), vinyl fluoride, hexafluoroisobutene, a monomer indicated by the formula

CH₂=CX¹(CF₂)ₙX²

(in the formula, X¹ is H or F; X² is H, F, or Cl; and n is an integer from 1 to 10), ethylene, propylene. 1-butene, 2-butene, vinyl chloride, and vinylidene chloride. Furthermore, as the CTFE copolymer, it is more preferred that this be a perhalo polymer.

As the CTFE copolymer, it is more preferred that this comprise CTFE units and comprise copolymerized units derived from a monomer which is at least one species selected from among the group consisting of TFE, HFP, and PAVE; and it is still more preferred that this consist substantially of only these copolymerized units. Furthermore, from the standpoint of low permeability with respect to fuel, it is preferred that this not comprise ethylene, vinylidene fluoride, vinyl fluoride, or other such monomers having CH bonds. While adhesion of perhalo polymers with respect to rubber is ordinarily difficult to achieve, in accordance with the constitution of the present invention, even where fluororesin layer(s) are layer(s) that consist of perhalo polymer(s), interlayer adhesion between fluororesin layer(s) and rubber layer(s) is firm.

It is preferred that the CTFE copolymer be such that CTFE units are 10 mol% to 90 mol% of all monomer units.

As the CTFE copolymer, it is particularly preferred that this comprise CTFE units, TFE units, and monomer (α) units which are derived from a monomer (α) that is capable of being copolymerized with the CTFE units and TFE units.

"CTFE units" and "TFE units" respectively refer to those portions of the molecular structure of the CTFE copolymer that are derived from CTFE (-CFCl-CF₂-) and those portions thereof that are derived from TFE (-CF₂-CF₂-); likewise, the foregoing "monomer (α) units" refer to those portions of the molecular structure of the CTFE copolymer that are produced as a result of addition of monomer (α).

As the monomer (α), so long as it is a monomer that is capable of being copolymerized with CTFE and TFE there is no particular limitation with respect thereto; ethylene (Et), vinylidene fluoride (VdF), perfluoro(alkyl vinyl ether) (PAVE) indicated by CF₂=CF-ORf¹ (in the formula, Rf¹ is a perfluoroalkyl group having 1 to 8 carbons), vinyl monomer indicated by CX³X⁴=CX⁵(CF₂)ₙX⁶ (in the formula, X³, X⁴, and X⁵ are each hydrogen atom or fluorine atom and may be the same or different; X⁶ is hydrogen atom, fluorine atom, or chlorine atom; and n is an integer from 1 to 10), alkyl perfluorovinyl ether derivative indicated by CF₂=CF-OCH₂-Rf² (in the formula, Rf² is a perfluoroalkyl group having 1 to 5 carbons), and so forth may be cited as examples; thereamong, it is preferred that this be at least one species selected from among the group consisting of PAVE, the foregoing vinyl monomer, and alkyl perfluorovinyl ether derivative; and it is more preferred that this be at least one species selected from among the group consisting of PAVE and HFP.

As the alkyl perfluorovinyl ether derivative, it is preferred that this be such that Rf² is a perfluoroalkyl group having 1 to 3 carbons, and it is more preferred that this be CF₂=CF-OCH₂-CF₂CF₃-

The relative amounts of CTFE units and TFE units within the CTFE copolymer are such that CTFE units are 15 mol% to 90 mol% thereof while TFE units are 85 mol% to 10 mol% thereof, it being more preferred that CTFE units be 20 mol% to 90 mol% thereof while TFE units be 80 mol% to 10 mol% thereof. Furthermore, it is more preferred that this be constituted from 15 mol% to 25 mol% of CTFE units, and 85 mol% to 75 mol% of TFE units.

It is preferred that the CTFE copolymer be such that the sum of the CTFE units and the TFE units therewithin constitute 90 mol% to 99.9 mol% thereof, and the monomer (α) units therewithin constitute 0.1 mol% to 10 mol% thereof. If the monomer (α) units therewithin were to be less than 0.1 mol% thereof, this would create a tendency toward inferior moldability, resistance to environmental stress cracking, and fuel crack resistance; above 10 mol% thereof, there would be a tendency toward inferior lowering of permeability with respect to fuel, heat resistance, and mechanical properties.

It is most preferred that the (b1) fluoropolymer be PCTFE or CTFE-TFE-PAVE copolymer. The foregoing CTFE-TFE-PAVE copolymer is a copolymer that consists substantially of only CTFE, TFE, and PAVE. At the PCTFE and the CTFE-TFE-PAVE copolymers, there being no hydrogen atom that is directly bonded to a carbon atom making up the main chain, the dehydrofluorination reaction does not proceed. Accordingly, it is not possible to employ conventional adhesion improvement methods that utilize unsaturated bonds formed within the fluoropolymer through use of the dehydrofluorination reaction.

As the PAVE, perfluoro(methyl vinyl ether) (PMVE), perfluoro(ethyl vinyl ether) (PEVE), perfluoro(propyl vinyl ether) (PPVE), perfluoro(butyl vinyl ether), and so forth may be cited as examples, it being preferred thereamong that this be at least one species selected from among the group consisting of PMVE, PEVE, and PPVE.

It is preferred that PAVE units be not less than 0.5 mol% of all monomer units, and preferred that this be not greater than 5 mol% thereof.

CTFE units and other such structure units are the values obtained as a result of carrying out ¹⁹F-NMR analysis.

The (b1) fluoropolymer may be such that at least one reactive functional group which is a species selected from among the set consisting of carbonyl group, hydroxyl group, heterocyclic group, and amino group is introduced at a side chain and/or end of the main chain of the polymer.

In the context of the present specification, a "carbonyl group" is a divalent carbon group that is made up of a carbon-oxygen double bond and that is typically indicated as -C(=O)-. As reactive functional groups which contain the carbonyl group, while there is no particular limitation with respect thereto, carbonate groups, carboxylic acid halides (halogeno formyl groups), formyl groups, carboxyl groups, ester bonds (-C(=O)O-), acid anhydride bonds (-C(=O)O-C(=O)-), isocyanate groups, amide groups, imide groups (-C(=O)-NH-C(=O)-), urethane bonds (-NH-C(=O)O-), carbamoyl groups (NH₂-C(=O)-), carbamoyloxy groups (NH₂-C(=O)O-), ureido groups (NH₂-C(=O)-NH-), oxamoyl groups (NH₂-C(=O)-C(=O)-), and so forth, and moieties that include carbonyl group(s) as part(s) of their chemical structure, may be cited as examples.

Alkyl group(s) and/or other such hydrocarbon group(s) may, for example, be substituted for the hydrogen atom(s) that would otherwise be bonded to nitrogen atom(s) in amide groups, imide groups, urethane bonds, carbamoyl groups, carbamoyloxy groups, ureido groups, oxamoyl groups, and so forth.

As the reactive functional group, from the standpoint of ease of introduction, and from the standpoint of ability to cause the (b1) fluoropolymer to have suitable heat resistance and satisfactory adhesion at a comparatively low temperature, amide group, carbamoyl group, hydroxyl group, carboxyl group, carbonate group, carboxylic acid halide group, and acid anhydride bond are preferred; amide group, carbamoyl group, hydroxyl group, carbonate group, carboxylic acid halide group, and acid anhydride bond being more preferred.

Known compounding ingredients-e.g., crosslinking agent (vulcanizing agent), vulcanization accelerator, stabilizer, colorant, plasticizer, reinforcing material, and so forth-may, in correspondence to purpose, be added to polymer layer(s) that are laminated with the composition for the laminate.

As embodiments in which the laminate in accordance with the present invention is employed in a fuel oil-type hose, a two-layer hose in which fluorine-containing polymer is arranged at an inner layer of the hose, and epichlorohydrin-type polymer is arranged at a layer to the exterior thereof; a three-layer hose in which a braided reinforcing layer is arranged to the exterior thereof; a hose having a four-layer structure in which a rubber layer is further arranged to the exterior thereof; and so forth may be cited as representative examples. As braided material used in the foregoing three-layer hose or four-layer hose, polyester fiber, polyamide fiber, glass fiber, vinylon fiber, cotton, and/or other such braided material is ordinarily used. Furthermore, as material for the outermost layer in the foregoing four-layer hose, besides epichlorohydrin-type polymer, ethylene-acrylate rubber, chloroprene rubber, chlorinated polyethylene rubber, chlorosulfonated polyethylene, and/or other such synthetic rubber(s) possessing resistance to thermal aging, weather resistance, oil resistance, and so forth are ordinarily used.

Although representative examples are given below in the form of working examples, it should be understood that the present invention is not to be limited thereby.

### Working Examples and Comparative Examples

A kneader and open roll mill were used to knead the respective materials in the blended amounts indicated in TABLE 1 to obtain a (i) composition for a laminate in the form of a sheet of thickness 2 mm to 2.5 mm.

### Laminate produced by vulcanization and adhesion with use of press

The foregoing (i) sheet and a (ii) polymer layer of thickness 0.3 mm to 0.5 mm which had low permeability with respect to gas were layered together, and the layered assembly was compressed for 30 minutes at 160° C and 20 kg/cm² to 25 kg/cm² to obtain a rubber-resin laminate of thickness 2.0 mm to 2.5 mm.

### Laminate produced by vulcanization and adhesion with use of steam

The foregoing (i) sheet and a (ii) polymer layer of thickness 0.3 mm to 0.5 mm which had low permeability with respect to gas were layered together, and the layered assembly was compressed for 4 minutes at 160° C and 20 kg/cm² to 25 kg/cm² to obtain a (iii) sheet of thickness 2.0 mm to 2.5 mm.

The foregoing (iii) sheet was vulcanized at 0.52 kPa (160° C) for 30 minutes in a vulcanizer to obtain a rubber-resin laminate of thickness 2.0 mm to 2.5 mm.

As the (ii) polymer layer having low permeability with respect to gas, CTFE-TFE-PPVE (21.3/76.3/2.4 (mol%)) copolymer fluororesin was employed.

### Evaluation of adhesion by 90° delamination testing

1.0 cm x 10 cm rectangular pieces were cut from the foregoing laminate produced by vulcanization and adhesion with use of a press and the foregoing laminate produced by vulcanization and adhesion with use of steam to prepare test pieces for use in adhesion testing, 90° delamination testing was carried out at 25° C and a pull rate of 50 mm/min, visual inspection being used to observe the status with respect to delamination. Results of delamination testing are shown in TABLE 2.

### Evaluation of adhesion by 180° folding

A utility knife was used to notch the (ii) polymer layer which had low permeability with respect to gas of the foregoing rectangular test pieces for use in adhesion testing, these were folded 180°, and visual inspection was used to observe the status with respect to delamination at the location of the notch. Results of delamination testing are shown in TABLE 2.
90° delamination testing (evaluation of status with respect to delamination) GOOD = Adhesion is firm, with occurrence of rubber failure between layers.
FAIR = Adhesion but no failure of material
BAD = Absolutely no adhesion; delamination occurs at interface.
180° folding testing (evaluation of status with respect to delamination) GOOD = Firm adhesion at entire notched location.
FAIR = Delamination at portion of notched location.
BAD = Delamination at entire notched location.

Compounding ingredients employed at Working Examples and Comparative Examples are indicated below.
- *1: "EPICHLOMER CG" manufactured by Osaka Soda Co., Ltd.
- *2: "SEAST 3" manufactured by Tokai Carbon Co., Ltd.
- *3: "SEAST SO" manufactured by Tokai Carbon Co., Ltd.
- *4: "Burgess #30" manufactured by Burgess Pigment Company
- *5: "ADK CIZER RS-107" manufactured by ADEKA Corporation
- *6: "SPLENDER R-300" manufactured by Kao Corporation
- *7: "NOCRAC NBC" manufactured by Ouchi Shinko Chemical Industrial Co., Ltd.
- *8: "NOCCELER TTCu" manufactured by Ouchi Shinko Chemical Industrial Co., Ltd.
- *9: "KYOWAMAG #150" manufactured by Kyowa Chemical Industry Co., Ltd.
- *10: "DHT-4A" manufactured by Kyowa Chemical Industry Co., Ltd.
- *11: "JER828" manufactured by Mitsubishi Chemical Corporation
- *12: "Noctizer SS" manufactured by Ouchi Shinko Chemical Industrial Co., Ltd.
- *13: "U-CAT SA-1" manufactured by San-Apro Ltd.
- *14: "Retarder CTP" manufactured by Ouchi Shinko Chemical Industrial Co., Ltd.
- *15: "DAISONET XL21-S" manufactured by Osaka Soda Co., Ltd.

**TABLE 1**

| Blended amount (unit: parts by weight) | Working Example 1 | Working Example 2 | Comparative Example 1 | Comparative Example 2 |
|---|---|---|---|---|
| Epichlorohydrin-type polymer *1 | 100 | 100 | 100 | 100 |
| HAF carbon *2 (filler) | 25 | 25 | 30 | 25 |
| FEF carbon *3 (filler) | 30 | 30 | 30 | 30 |
| Hard clay *4 | 15 | 15 | 15 | 15 |
| Di(butoxyethoxy)ethyl adipate *5 | 10 | 10 | 10 | 10 |
| Sorbitan monostearate *6 | 3 | 3 | 3 | 3 |
| Nickel dibutyldithiocarbamate *7 | 1 | 1 | 1 | 1 |
| Copper dimethyldithiocarbamate *8 | 0.5 | 0.5 | 0.5 | 0.5 |
| Magnesium oxide *9 | 3 | 3 | 3 | 3 |
| Synthetic hydrotalcite *10 | 3 | 3 | 3 | 3 |
| Epoxy resin *11 | 1.5 | 1.5 | 1.5 | 1.5 |
| 2,2-Dibenzamidodiphenyl disulfide *12 | 1 | 1 | 1 | 1 |
| Triallyl isocyanurate | 5 | 5 | 5 | 5 |
| DBU phenol salt *13 | 1 | 1 | 1 | 1 |
| Calcium sulfate hemihydrate | 5 | 5 | 5 | 5 |
| Ethylene thiourea | 0.5 | 0.5 | 0.5 | 0.5 |
| Zinc N-pentamethylenedithiocarbamate | 1 | 2 | | |
| Zinc isopropylxanthate | | | | 1 |
| N-cyclohexylthiophthalimide *14 | 1 | 1 | 1 | 1 |
| Quinoxaline-type vulcanizing agent *15 | 1.7 | 1.7 | 1.7 | 1.7 |

**TABLE 2**

| | Working Example 1 | Working Example 2 | Comparative Example 1 | Comparative Example 2 |
|---|---|---|---|---|
| 90° delamination testing (press) | GOOD | GOOD | GOOD | BAD |
| 180° folding testing (press) | GOOD | GOOD | FAIR | BAD |
| 90° delamination testing (steam) | GOOD | GOOD | FAIR | BAD |
| 180° folding testing (steam) | GOOD | GOOD | BAD | BAD |

As indicated in TABLE 2, it was confirmed as a result of 90° delamination testing and 180° folding testing that the laminates that employed compositions for laminates in accordance with the Working Examples had firmer adhesion than the laminates that employed compositions for laminates in accordance with the Comparative Examples.

### INDUSTRIAL UTILITY

The present invention provides a composition for a laminate which is such that vulcanized products obtained therefrom have excellent adhesion with respect to other substance(s) (e.g., other polymer(s)), and which may, for example, be employed in laminates with fluorine-containing polymer(s) and the like.

## Claims

1. A composition for a laminate **characterized in that** it contains (a) epichlorohydrin-type polymer; (b) zinc dithiocarbamate; (c) at least one compound which is a species selected from among the group consisting of 1,8-diazabicyclo[5.4.0]undecene-7 salt, 1,5-diazabicyclo[4.3.0]nonene-5 salt, 1,8-diazabicyclo[5.4.0]undecene-7, and 1,5-diazabicyclo[4.3.0]nonene-5; and (d) metal salt hydrate, wherein the (d) metal salt hydrate is a hydrate of a sulfate or acetate of a metal selected among sodium, aluminum, calcium, zinc, manganese, lanthanum, titanium, zirconium, iron, cobalt, nickel, magnesium, and copper.

2. The composition for the laminate according to claim 1 **characterized in that** it further contains (e) a compound having a vinyl group.

3. The composition for the laminate according to either claim 1 or 2 **characterized in that** the (d) compound is 0.1 part by weight to 80 parts by weight for every 100 parts by weight of the (a) epichlorohydrin-type polymer.

4. The composition for the laminate according to any of claims 1 through 3 **characterized in that** it contains (f) epoxy resin.

5. The composition for the laminate according to any of claims 1 through 4 **characterized in that** it contains (g) copper salt.

6. The composition for the laminate according to any of claims 1 through 5 **characterized in that** it contains (h) vulcanizing agent.

7. The composition for the laminate according to claim 6 **characterized in that** the (h) vulcanizing agent contains at least one vulcanizing agent which is a species selected from among the group consisting of quinoxaline-type vulcanizing agent, thiourea-type vulcanizing agent, mercaptotriazine-type vulcanizing agent, bisphenol-type vulcanizing agent, sulfur-type vulcanizing agent, and peroxide-type vulcanizing agent.

8. The composition for the laminate according to any of claims 1 through 7 **characterized in that** the (c) compound is 0.3 part by weight to 3.0 parts by weight for every 100 parts by weight of the epichlorohydrin-type polymer.

9. The laminate employing the composition for the laminate according to any of claims 1 through 8.

10. A hose or tube comprising the laminate according to claim 9.

11. An automotive fuel line comprising the hose or tube according to claim 10.

## Patentansprüche

1. Zusammensetzung für ein Laminat, **dadurch gekennzeichnet, dass** sie (a) Polymer vom Epichlorhydrintyp; (b) Zinkdithiocarbamat; (c) zumindest eine Verbindung, die eine Spezies ist, die aus der Gruppe ausgewählt ist, die aus 1,8-Diazabicyclo[5.4.0]undecen-7-Salz, 1,5-Diazabicyclo[4.3.0]nonen-5-Salz, 1,8-Diazabicyclo[5.4.0]undecen-7 und 1,5-Diazabicyclo[4.3.0]nonen-5 besteht; und (d) Metallsalzhydrat enthält, wobei das (d) Metallsalzhydrat ein Hydrat eines Sulfats oder Acetats eines Metalls ist, das aus Natrium, Aluminium, Calcium, Zink, Mangan, Lanthan, Titan, Zirkonium, Eisen, Kobalt, Nickel, Magnesium und Kupfer ausgewählt ist.

2. Zusammensetzung für das Laminat nach Anspruch 1, **dadurch gekennzeichnet, dass** sie ferner (e) eine Verbindung mit einer Vinylgruppe enthält.

3. Zusammensetzung für das Laminat nach Anspruch 1 oder 2, **dadurch gekennzeichnet, dass** die (d) Verbindung für je 100 Gewichtsteile des (a) Polymers vom Epichlorhydrintyp zu 0,1 Gewichtsteilen bis 80 Gewichtsteile vorhanden ist.

4. Zusammensetzung für das Laminat nach einem der Ansprüche 1 bis 3, **dadurch gekennzeichnet, dass** sie (f) Epoxidharz enthält.

5. Zusammensetzung für das Laminat nach einem der Ansprüche 1 bis 4, **dadurch gekennzeichnet, dass** sie (g) Kupfersalz enthält.

6. Zusammensetzung für das Laminat nach einem der Ansprüche 1 bis 5, **dadurch gekennzeichnet, dass** sie (h) Vulkanisierungsmittel enthält.

7. Zusammensetzung für das Laminat nach Anspruch 6, **dadurch gekennzeichnet, dass** das (h) Vulkanisierungsmittel zumindest ein Vulkanisierungsmittel enthält, das eine Spezies ist, die aus der Gruppe ausgewählt ist, die aus Vulkanisierungsmittel vom Chinoxalintyp, Vulkanisierungsmittel vom Thioharnstofftyp, Vulkanisierungsmittel vom Mercaptotriazintyp, Vulkanisierungsmittel vom Bisphenoltyp, Vulkanisierungsmittel vom Schwefeltyp und Vulkanisierungsmittel vom Peroxidtyp besteht.

8. Zusammensetzung für das Laminat nach einem der Ansprüche 1 bis 7, **dadurch gekennzeichnet, dass** die (c) Verbindung für je 100 Gewichtsteile des Polymers vom Epichlorhydrintyp zu 0,3 Gewichtsteilen bis 3,0 Gewichtsteile vorhanden ist.

9. Laminat, bei dem die Zusammensetzung für das Laminat nach einem der Ansprüche 1 bis 8 verwendet wird.

10. Schlauch oder Rohr, umfassend das Laminat nach Anspruch 9.

11. Kraftfahrzeugkraftstoffleitung, umfassend den Schlauch oder das Rohr nach Anspruch 10.

## Revendications

1. Composition pour un stratifié **caractérisée en ce qu'**elle contient (a) un polymère de type épichlorhydrine ; (b) du dithiocarbamate de zinc ; (c) au moins un composé qui est une espèce choisie dans le groupe constitué par un sel de 1,8-diazabicyclo[5.4.0]undécène-7, un sel de 1,5-diazabicyclo[4.3.0]nonène-5, le 1,8-diazabicyclo[5.4.0]undécène-7 et le 1,5-diazabicyclo[4.3.0]nonène-5 ; et (d) un hydrate de sel métallique
dans laquelle (d) l'hydrate de sel métallique est un hydrate d'un sulfate ou d'un acétate d'un métal choisi parmi le sodium, l'aluminium, le calcium, le zinc, le manganèse, le lanthane, le titane, le zirconium, le fer, le cobalt, le nickel, le magnésium et le cuivre.

2. Composition pour le stratifié selon la revendication 1 **caractérisée en ce qu'**elle contient en outre (e) un composé possédant un groupe vinyle.

3. Composition pour le stratifié selon la revendication 1 ou 2 **caractérisée en ce que** le composé (d) représente de 0,1 partie en poids à 80 parties en poids pour 100 parties en poids du polymère de type épichlorhydrine (a).

4. Composition pour le stratifié selon l'une quelconque des revendications 1 à 3 **caractérisée en ce qu'**elle contient (f) une résine époxy.

5. Composition pour le stratifié selon l'une quelconque des revendications 1 à 4 **caractérisée en ce qu'**elle contient (g) un sel de cuivre.

6. Composition pour le stratifié selon l'une quelconque des revendications 1 à 5 **caractérisée en ce qu'**elle contient (h) un agent de vulcanisation.

7. Composition pour le stratifié selon la revendication 6 **caractérisée en ce que** l'agent de vulcanisation (h) contient au moins un agent de vulcanisation qui est une espèce choisie dans le groupe constitué par les agents de vulcanisation de type quinoxaline, les agents de vulcanisation de type thiourée, les agents de vulcanisation de type mercaptotriazine, les agents de vulcanisation de type bisphénol, les agents de vulcanisation de type soufre et les agents de vulcanisation de type peroxyde.

8. Composition pour le stratifié selon l'une quelconque des revendications 1 à 7 **caractérisée en ce que** le composé (c) représente de 0,3 partie en poids à 3,0 parties en poids pour 100 parties en poids du polymère de type épichlorhydrine.

9. Stratifié utilisant la composition pour le stratifié selon l'une quelconque des revendications 1 à 8.

10. Tuyau ou tube comprenant le stratifié selon la revendication 9.

11. Conduite de carburant automobile comprenant le tuyau ou le tube selon la revendication 10.
